# EUROPEAN PATENT SPECIFICATION

(11) **EP 2 948 303 B1**
(45) Date of publication and mention of the grant of the patent: **15.09.2021**
(21) Application number: 14702963.1
(22) Date of filing: 22.01.2014
(51) Int. Cl.: B32B 21/08, B32B 27/06, E04F 15/02, B32B 9/02, B32B 9/04

(54) **LAMINATED CORK-BASED PANEL WITHOUT WOOD LAYERS, THE PANEL COMPRISING A CORK-BASED COUPLING MEMBER**
LAMINIERTE KORKPLATTE OHNE HOLZSCHICHTEN UND MIT EINEM KORKVERBINDUNGSELEMENT
PANNEAU À BASE DE LIÈGE STRATIFIÉ NE COMPRENANT PAS DE COUCHES DE BOIS, LE PANNEAU COMPRENANT UN ÉLÉMENT D'ACCOUPLEMENT À BASE DE LIÈGE

(30) Priority: 22.01.2013 PT 10674613
(43) Date of publication of application: 02.12.2015
(73) Proprietor: Amorim Revestimentos, S.A., 4536-907 S. Paio de Oleiros (PT)
(72) Inventor: CHAGAS, José António Marchão Das, P-4536-907 S. Paio de Oleiros (PT); OLIVEIRA, José Joaquim Figueiredo de, P-4535-334 Paços de Brandão (PT)
(74) Representative: Alves Moreira, Pedro
(86) International application number: PCT/PT2014/000005
(87) International publication number: WO 2014/116131

(56) References cited:
- DE-A1-102007 054 516
- US-A1- 2003 033 777
- US-A1- 2013 212 971
- DATABASE WPI Week 201120 Thomson Scientific, London, GB; AN 2011-B64129 & CN 101 936 062 A (JIANGSU LODGI WOOD IND CO LTD) 5 January 2011 (2011-01-05)

## Description

### FIELD OF INVENTION

The present invention relates to a laminated cork-based panel provided with a cork coupling member to allow a connection to other similar panels. The panel of the present invention is fully devoid of wood material. The present invention is applicable, without being limited, to floors.

### BACKGROUND OF THE INVENTION

It is well known to use cork in a variety of industrial applications, and more particularly in panels for flooring, walls and ceilings.

The natural characteristics of the cork material have been extensively used in the production of flooring provided with exceptional features in terms of step impact absorption, as well as acoustic and thermal insulation, among others.

These features of cork-based flooring provide high comfort to users, wherein the combination of cork with other materials imparts a greater versatility to these flooring products, particularly with regard to aesthetic aspects and others such as, for example, wear resistance.

For a long time the flooring market was ruled by products called wood- and/or cork-based "laminates". Such laminated products are also commonly referred to as "sandwich" flooring, as they integrate panels having multiple layers of different materials with variable thicknesses.

The purpose of combining different materials into layers is to obtain products combining the characteristics of used materials thereof, providing a remarkable versatility regarding the range of use and the technical characteristics of the final product. Currently, a number of flooring laminates is commercially available serving growing needs of (acoustic, thermal and step impacts) insulation, comfort, appearance, among others, allowing users to access products meeting their needs.

Many products designed for flooring comprise pressed combinations of multiple layers of cork, wood and composites thereof, which layers are usually arranged in an alternate manner. Normally, more or less layers of other materials are also arranged in a particular order, more or less varied, so as to provide such floorings with properties such as, for example, dimensional stability, better tension distribution and better resistance to wear.

Floating floors made of wood- and/or cork- based laminated panels are usually chosen when acoustic and shock insulation is to be assured in addition to aesthetics and comfort.

Use of layers of wood material in laminates as mentioned above, is based on the need to provide the laminate with a so-called structural member, *i.e.,* a member that provides the laminate with the required stiffness.

In the particular case of flooring panels, namely floating floors, such structural wood layer has proved being essential in many applications in that there is a need to arrange coupling members in the panels allowing for the assembly of the floor by coupling the panels to each other. Thus, such coupling members are formed directly and integrally in the wood layer (structural layer), since this material has mechanical properties of tensile strength and bending strength suitable to withstand the loads associated with the connection of the panels to each other.

In the following, prior art documents are presented, exemplifying laminated panels provided with coupling members integral with the structural wood layer so as to form a single piece.

Patent U.S. 8234829 B2, entitled "Floor Panel and Method for the Manufacture Thereof," by Unilin Beheer B.V., Besloten Vennootschap, relates to floor panels composed of layers and comprising one upper layer forming a decorative surface and at least one sound absorbing layer. The panel further comprises at least one first structural layer of MDF and/or HDF. The panel includes couplings embedded in the structural layer as a single piece and arranged along at least two edges of the panel. Couplings allow vertical and horizontal locking among similar attached panels.

Patent EP 1292744 B1, entitled "Floor Covering," whose assignee is Flooring Industries Ltd., relates to a floor covering consisting of hard panels provided with coupling means on at least two opposite edges of the panel and integrated therein. The coupling means provide an attachment in a direction perpendicular to the plane of the floor covering as well as in a direction perpendicular to the edges and parallel to the plan of the floor covering. Said coupling means comprise a tongue and a groove. There is a lip on the underside of the groove that is bigger than a lip on the upper side. The edge provided with the tongue is flexible.

German Patent Application DE 102 008021970 A1, "Floor Boards Have Complementary Holder Profiles, at Their Facing Edges, with a Projection on a Locking Pin Fitting Into a Recess in a Positive Fit "by LAMINATEPARK GMBH & CO., discloses a panel for flooring that features additional support profiles at opposite ends. One panel is arranged in a direction on the laying plane and then is moved horizontally to provide a direct engagement between the profiles, being blocked by a projection and a corresponding recess. One locking pin has one movable end to move the projection and fold it in the free space behind it.

German patent application DE 10 2007 054516 A1 discloses a process for producing a floor covering panel, a floor covering panel having a protective layer and a floor covering which is composed of a plurality of such floor covering panels. The floor covering panel having a natural surface of wood or cork in which a protective layer is disposed on the base panel in order to protect the floor covering panel from abrasion wear and other damage which can occur when such a floor covering panel is walked upon in ordinary use.

US patent application US 2003033777 A1 discloses a floor panel of the type comprising a hard top layer forming a decorative surface, from which, together with other identical or similar floor panels, a floor covering can be formed, wherein this floor panel includes at least one sound-absorbing layer which is integrated into the floor panel and is located between other layers of this floor panel.

US patent application US 2013212971 A1 discloses a tile system comprising a plurality of tiles and a coupling means made of polyvinyl chloride couplings. This invention teaches that the couplings are not part of the tiles but instead are inserted into openings made in the core of the tiles.

Chinese patent application CN 101936062 discloses a lock for wood floorings, particularly a kind of cork or plastic floor snap lock comprising joint tongue and tongueand-groove connections. Horizontal locking between the joint tongue and the tongue-and-groove is achieved by contact surfaces C and D, and vertical locking is achieved by contact surfaces A and B. This solution assures planeness of the flooring.

In this sort of solution widely spread in the prior art, drawback exists in that the panels must include a structural layer of wood. In many cases, the only function of said wood layer is to physically support the coupling members for connecting to similar panels. Such wood layer adds significantly weight to the total weight of the panel as well as to its production cost.

Accordingly, a need exists for a laminated cork-based panel devoid of any wood layer, which panel can be coupled to similar panels for forming a floor, for example.

### SUMMARY OF THE INVENTION

This invention relates to a laminated panel (1) of cork-based material without wood material, comprising:
at least one central layer (2) of cork-based material having a first face and a second face, and
at least one wear outer layer (4) arranged on said first face of central layer (2), and
a coupling member (3) arranged on at least two sides of panel (1), wherein the coupling element (3) is an extension of said central layer (2) at said sides.

In one aspect of the invention, said central layer (2) is made of cork material.

In another aspect, central layer (2) is made of agglomerated cork.

In yet another aspect, panel (1) of the invention comprises a coupling member (3) at two opposite sides (6, 7) of panel (1). Preferably, the coupling member (3) of one of said two sides of the panel (1) has180° rotation symmetry relative to the coupling member (3) of the other side of panel (1).

In another aspect of the invention, the coupling member (3) has a thickness (E) less than or equal to 80% of the thickness of central layer (2), preferably has a thickness (E) bigger than or equal to 60% of the thickness of central layer (2), still more preferably 50%.

In another aspect, the coupling member (3) comprises a vertical projection (3B).

Preferably, the laminated panel (1) of the invention further comprises one base outer layer (5) arranged on the second face of central layer (2), wherein the base outer layer (5) is made of polyvinyl chloride.

More preferably, wear outer layer (4) and base outer layer (5) cover at least a respective coupling member (3).

In a preferred embodiment, panel (1) of the invention has a rectangular shape and comprises:
one central layer (2) of agglomerated cork,
a coupling member (3) on each of two opposite sides (6, 7) of panel (1), wherein the coupling member (3) is provided with a vertical projection (3B) and has a thickness (E) which is 50% of the thickness of the central layer (2), and
one base outer layer (5) made of polyvinyl chloride disposed on the second face of the agglomerated cork central layer (2).

This invention also relates to a floor, comprising panels (1) as defined above.

### BRIEF DESCRIPTION OF DRAWINGS

In the following, this invention is described with reference to the accompanying drawings, in which:
Fig. 1 shows a schematic view of the cross-section of an embodiment of the panel of the present invention.
Fig. 2 shows a perspective view of the whole panel of Fig. 1.
Fig. 3 shows a perspective view of a panel of the invention without its base outer layer.
Fig. 4 shows a schematic view of an enlarged coupling member.

### DETAILED DESCRIPTIONOFTHE INVENTION

The present invention relates to a laminated cork-based panel (1) without any wood layer, said panel (1) being provided with a coupling member (3) made of cork or cork-based material for coupling to other similar panels (1).

This invention further relates to a floor formed from the above panels (1).

The expression "cork material" or simply "cork "relates to a material selected from the group comprising natural cork, natural colmated cork, agglomerated cork, micro-agglomerated cork and the like and combinations thereof.

The term "agglomerated cork", according to standard ISO 2190, relates to cork material comprising at least 51% (by weight) of granulated cork having a minimum particle size of 0,5 mm and a water content equal to or less than 8%, while the term "micro-agglomerated cork" refers to agglomerated cork, whose cork grains have a particle size of 0,1 - 2mm.

The term "cork-based material" or "cork-based" in the context of the present invention relates to cork material, as defined above, combined with other material than wood. By way of example, a layer of cork-based material is a composite layer made of polymeric material and cork material.

The term "wood" or "wood-based material" or "wood material" in the context of the present specification refers to wood and wood derived products, such as wood agglomerates, plywood, and wood-polymer composites, wherein:
- wood agglomerates are produced from wood particles of small size impregnated with urea-formaldehyde resins and bonded by hot pressing. A particular case is the so-called medium density fiber agglomerate, also known as MDF (Medium Density Fiberboard);
- high-density fiber agglomerates, also called HDF (High Density Fiberboard), are obtained from wet fibers compressed using high levels of pressure and temperature, the bonding being facilitated by natural origin resin which is found in such fibers;
- plywoods are formed by an odd number of thin sheets of wood glued together using urea-formaldehyde resin and arranged so that the direction of the fibers on a sheet is perpendicular to an adjacent one, the composition being subsequently subjected to an application of heat and pressure for a given time;
- composites of wood fibers with thermoplastics, commonly known as WPC ("Wood Plastic Composites") combine cellulose from wood with thermoplastics, such as polypropylene (PP), polystyrene (PS) or polyvinyl chloride (PVC).

In prior art panels using wood as structural material, the layers of wood-based material most commonly used are so-called HDF or MDF layers, which provide stiffness to the panel, in particular regarding tensile or flexionstrength.

The quantitative term "about X", where X is a given number used within the context of this description, means any number belonging to a range of numbers, the lower limit of such range corresponding to X-10%.X and the higher limit corresponding to X + 10 % .X; for example, the sentence "about 50%" means "50% ± 5%".

It should be noted that regardless of the explicit presentation of quantitative term "about X", any X value presented in this description shall be interpreted as an approximate value of the actual value X, since such an approach to the actual value would be reasonably expected by the person skilled in the art due to experimental and/or measurement conditions introducing deviations from the actual value.

Unless otherwise specifically mentioned, the ranges provided herein are intended to provide a simplified and technically acceptable manner to indicate each individual value within the respective range. As an example, the term " 1 or 2" or "between 1 and 2" means any value within this range, for example 1,0; 1,1; 1,2; 1,3; 1,4; 1,5; 1,6; 1,7; 1,8; 1,9; 2,0. All values mentioned herein should be interpreted as approximate values, for example, reference to "50% "means" about 50%".

In the context of the present description, the term "comprising" should be interpreted as "including, among others". Therefore, said term should not be interpreted as "consisting only of".

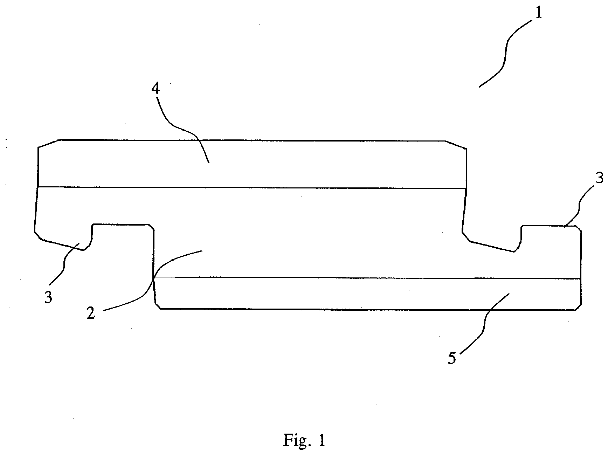

Referring to Figs. 1 to 3, the laminated panel (1) of cork or cork-based material of the present invention is devoid of any wood material and comprises:
at least one central layer (2) of cork material or cork-based material, the central layer (2) having a first face and a second face,
at least one wear layer (4) arranged on said first face of central layer (2)
a coupling member (3) arranged on at least two sides of panel (1), the coupling member (3) being an extension of said central layer (2) at said sides.

For clarity, note that a panel (1) is delimited by a periphery or edge. The shape of the periphery may be any shape obtainable by the production methods, such as, for example, a shape selected from the group comprising rectangular, square, triangular, circular and similar shapes and combinations thereof.

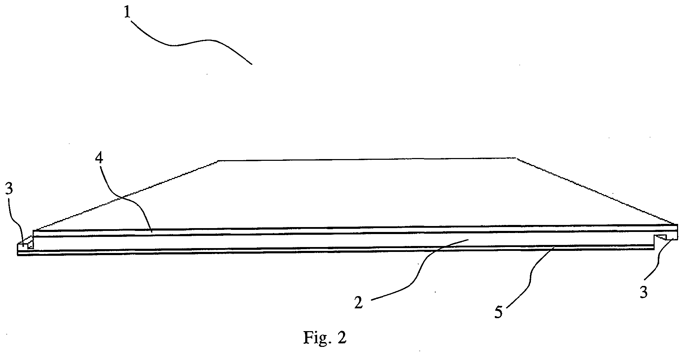

In general, polygonal shapes are the most commonly used in industry for the production of panels, particularly rectangular and square shapes, such that the periphery (or edge) of the panel is defined by the sides of the polygon which shapes it. Fig. 2 shows an example of a panel which periphery (or edge) is rectangular.

In the context of the present invention, the term "sides" refers to the sides defined by the polygonal shape of a panel periphery. Obviously, a polygonal panel (1) of the present invention has at least three sides, and, for example, a rectangular panel (1) has 4 sides.

So far, the person skilled in the art have not considered the possibility of using coupling members of cork material, as its mechanical characteristics, in particular tensile and bending strength, were considered unsuitable for such a function.

Surprisingly, the applicant have found that the use of coupling members (3) formed as an extension of a central layer (2) made of cork or cork-based material, serves the purposes of mounting and fixing panels (1) in order to forma floor, for example, a floating floor.

This design avoids the need to use the so-called structural wood layers, thereby imparting a significant reduction in weight of the panel (1) and also to a reduction of production costs.

The present invention also affects the thickness of the central layer (2), as in the absence of any wood layer, the thickness of the cork layer (2) may be increased as compared with a wood-based panel of similar thickness, thereby adding significant gains in step impact absorption and acoustic insulation characteristics.

The present panel (1) further allows simplifying the production process as it reduces the number of different materials to make compatible while having a positive impact on the amount of binders and method of using the same.

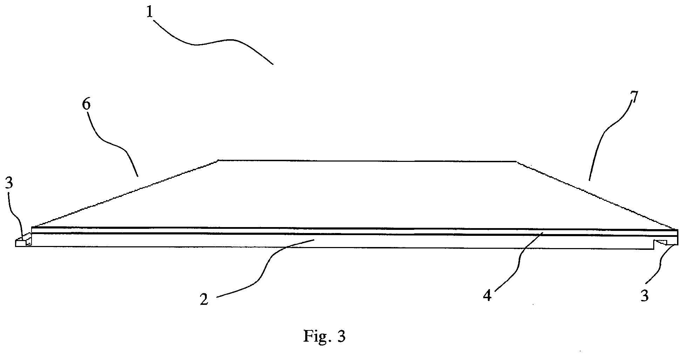

In general, the most used panels in industry have a rectangular or square shape. Preferably, the panels (1) of the invention comprise a coupling member (3) disposed on opposite sides (6, 7) of its configuration (see Fig. 3)
In a preferred embodiment of the present invention, the coupling member (3) of one of the two sides of the panel (1) has a 180° rotation symmetry relative to the coupling member (3) of the other side of the panel (1), as shown in Figs. 2 and 3, whether or not the coupling members (3) are disposed in opposite sides (6, 7) of panel (1). This particular configuration provides practical advantages in coupling panels (1) for floor assembly. Of course other relative configurations between coupling members (3) can be used.

Preferably, the coupling member (3) of the present invention aims to provide a substantially vertical laying of panels (1) in relation to each other, ensuring, after laying, its immobilization with respect to a spacing movement in the horizontal plane that would be caused by a tensile force in such a plane applied to the attached panels (1). Therefore, two coupled panels (1) could be disassembled by a vertical displacement or by a horizontal sliding movement of a panel (1) relative to the other.

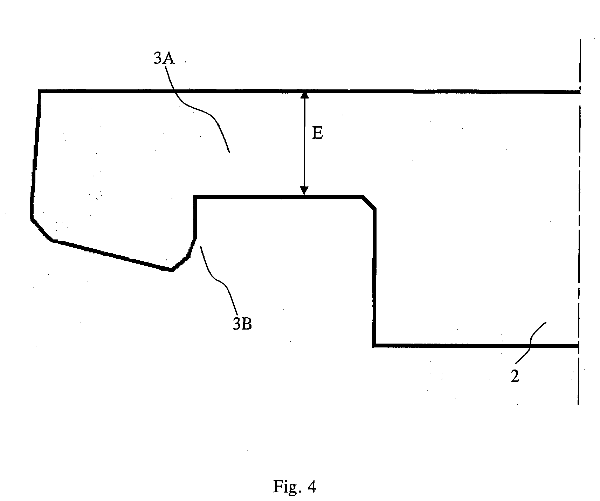

For this purpose, the coupling member (3) is provided with a vertical projection (3B) that allows coupling member (3) to function as a rail, regarding the movements and restrictions defined above. Its configuration is illustrated as an example in Figs. 1 to 4. This particular configuration of coupling member (3) defines a main body (3A), resulting of its extension from central layer (2), and said vertical projection (3B), that protrudes substantially perpendicular to the main body (3A) at the end thereof (see Fig. 4).

Referring to Fig. 4, coupling member (3) has a thickness (E) less than or equal to about 80% of the central layer (2) thickness, preferably less than or equal to about 60% of the central layer (2) thickness, more preferably between about 10% and 50% of the central layer (2) thickness, most preferably of about 50% of the central layer (2) thickness.

The term "coupling member thickness" means the thickness (E) of the main body (3A) (of the coupling member (3)) extending from central layer (2) (see Fig. 4).

Referring to wear outer layer (4), it may comprise any materials suitable to endure wear resistance, while allowing printing, etching or drawing of decorative motifs or patterns, since this will be the visible layer and the one directly contacted by the user.

The panel (1) of the present invention may comprise one base outer layer (5) arranged on its second face. This layer (5) may have several functions such as, for example, protection and waterproofing of central layer (2). The material of the base layer (5) may be any other material than wood, deemed appropriate by the person skilled in the art. As an example, polymeric materials and fiber composite materials can be used as components of said base layer (5). In a preferred embodiment, the base layer (5) is made of polyvinyl chloride.

Preferably, for aesthetic reasons and uniformity of the surface of the panel (1) of the invention, the wear outer layer (4) should cover at least one respective coupling member (3), namely the body (3A) of the coupling member or the coupling members (3) extending from the central layer (2) at its face. The same applies for the case of the base outer layer (5), when this exists (see Figs. 1 and 2).

In a preferred embodiment, panel (1) of the present invention is of a rectangular shape and comprises:
one central layer (2) of agglomerated cork,
one printed wear outer layer (4) arranged on the first face of the central layer (2), a coupling member (3) on each of two opposite sides (6, 7) of panel (1), wherein the coupling member (3) is provided with a vertical projection (3B) and has a thickness(E) which is about 50% of the thickness of the central layer (2), and one base outer layer (5) made of polyvinyl chloride arranged on the second face of central layer (2) of agglomerated cork.

Laminated panels (1) of the present invention are particularly suitable for flooring assemblies. However, applications may vary, and they could also be used, for example, on walls or even ceilings.

## Claims

1. A laminated panel (1) of cork-based material without wood material, comprising:
at least one central layer (2) of agglomerated cork having a first face and a second face, and
at least one wear outer layer (4) arranged on said first face of central layer (2),
**characterized in that** it further comprises a coupling member (3) arranged on at least two sides of the panel (1), wherein the coupling member (3) is an extension of said central layer (2) at said sides and it is configured such that it provides vertical laying of the panel (1) in relation to another panel (1).

2. The laminated panel (1) according to claim 1, wherein it comprises a coupling member (3) at two opposite sides (6, 7) of the panel (1).

3. The laminated panel (1) according to claim 2, wherein the coupling member (3) of one of said two sides of the panel (1) has 180° rotation symmetry relative to the coupling member (3) of the other side of the panel (1).

4. The laminated panel (1) according to any of the claims 1 to 3, wherein the coupling member (3) has a thickness (E) less than or equal to 80% of the thickness of the central layer (2).

5. The laminated panel (1) according to claim 4, wherein the coupling member (3) has a thickness (E) less than or equal to 60% of the thickness of the central layer (2).

6. The laminated panel (1) according to claim 4or 5, wherein the coupling member (3) comprises a vertical projection (3B).

7. The laminated panel (1) according to any of the preceding claims, wherein it further comprises one base outer layer (5) arranged on the second face of central layer (2).

8. The laminated panel (1) according to claim 7, wherein the base outer layer (5) is made of polyvinyl chloride.

9. The laminated panel (1) according to claim 1 or 8, wherein the wear outer layer (4) and the base outer layer (5) cover at least a respective coupling member (3).

10. The laminated panel (1) according to any of the preceding claims, wherein it has a rectangular shape and comprises:
one central layer (2) of agglomerated cork,
a coupling member (3) on each of two opposite sides (6, 7) of the panel (1), the coupling member (3) being provided with a vertical projection (3B) and having a thickness (E) which is 50% of the thickness of the central layer (2), and
one base outer layer (5) made of polyvinyl chloride arranged on the second face of the agglomerated cork central layer (2).

11. A flooring, **characterized in that** it is made of panels (1) according to any of the preceding claims.

## Patentansprüche

1. Eine laminierte Platte (1) aus korkbasiertem Material ohne Holzmaterial, umfassend:
mindestens eine Mittelschicht (2) aus agglomeriertem Kork mit einer ersten Fläche und einer zweiten Fläche, und
mindestens einer Verschleißaußenschicht (4) auf der besagten ersten Seite der Mittelschicht (2) angeordnet,
**dadurch gekennzeichnet, dass** sie ferner ein Kopplungselement (3) umfasst, das an mindestens zwei Seiten der Platte (1) angeordnet ist, wobei das Kopplungselement (3) eine Verlängerung der besagten Mittelschicht (2) an diesen besagten Seiten ist, und das so gestaltet ist, dass es ein senkrechtes Legen der Platte (1) in Bezug auf eine andere Platte (1) bereitstellt.

2. Laminierte Platte (1) nach nach Anspruch 1, wobei sie ein Kupplungselement (3) an zwei gegenüberliegenden Seiten (6, 7) der Platte (1) umfasst.

3. Laminierte Platte (1) nach Anspruch 2, wobei das Kupplungselement (3) einer der beiden Seiten der Platte (1) eine 180 °-Drehsymmetrie relativ zum Kupplungselement (3) der anderen Seite der Platte (1) aufweist.

4. Laminierte Platte (1) nach einem der Ansprüche 1 bis 3, wobei das Kupplungselement (3) eine Dicke (E) aufweist, die kleiner oder gleich 80% der Dicke der Mittelschicht (2) ist.

5. Laminierte Platte (1) nach Anspruch 4, wobei das Kupplungselement (3) eine Dicke (E) aufweist, die kleiner oder gleich 60% der Dicke der Mittelschicht (2) ist.

6. Laminierte Platte (1) nach Anspruch 4 oder 5, wobei das Kopplungselement (3) einen senkrechten Vorsprung (3B) umfasst.

7. Laminierte Platte (1) nach einem der vorhergehenden Ansprüche, wobei sie ferner eine Grundaußenschicht (5) umfasst, die auf der zweiten Seite der Mittelschicht (2) angeordnet ist.

8. Laminierte Platte (1) nach Anspruch 7, wobei die Grundaußenschicht (5) aus Polyvinylchlorid besteht.

9. Laminierte Platte (1) nach Anspruch 1 oder 8, wobei die Verschleißaußenschicht (4) und die Grundaußenschicht (5) mindestens ein entsprechendes Kupplungselement (3) bedecken.

10. Laminierte Platte (1) nach einem der vorhergehenden Ansprüche, wobei sie eine rechteckige Form aufweist und umfasst:
eine Mittelschicht (2) aus agglomeriertem Kork,
ein Kupplungselement (3) auf jeder der beiden gegenüberliegenden Seiten (6, 7) der Platte (1), wobei das Kopplungselement (3) mit einem senkrechten Vorsprung (3B) versehen ist und eine Dicke (E) aufweist, die 50% der Dicke der Mittelschicht (2) beträgt, und
eine Grundaußenschicht (5) aus Polyvinylchlorid, die auf der zweiten Seite der agglomerierten Korkmittelschicht (2) angeordnet ist.

11. Bodenbelag, **dadurch gekennzeichnet, dass** er aus Paneelen (1) gemäß einem der vorhergehenden Ansprüche besteht.

## Revendications

1. Panneau (1) stratifié de matériau à base de liège sans matériau de bois, comprenant:
au moins une couche (2) centrale de liège aggloméré, ayant une première face et une seconde face et
au moins une couche (4) extérieure d'usure agencée sur ladite première face de la couche (2) centrale,
**caractérisé en ce qu'**il comprend en outre un élément (3) de couplage disposé sur au moins deux côtés du panneau (1), dans lequel l'élément (3) de couplage est une extension de ladite couche (2) centrale sur lesdits côtés et il est configuré de façon à assurer une mise en place verticale du panneau (1) par rapport à l'autre panneau (1).

2. Panneau (1) stratifié selon la revendication 1, dans lequel il comprend un élément (3) de couplage sur deux côtés (6, 7) opposés du panneau (1).

3. Panneau (1) stratifié selon la revendication 2, dans lequel l'élément (3) de couplage de l'un desdits deux côtés du panneau (1) a une symétrie de rotation de 180 ° par rapport à l'élément (3) de couplage de l'autre côté du panneau (1).

4. Panneau (1) stratifié selon l'une quelconque des revendications 1 à 3, dans lequel l'élément (3) de couplage a une épaisseur (E) inférieure ou égale à 80% de l'épaisseur de la couche (2) centrale.

5. Panneau (1) stratifié selon la revendication 4, dans lequel l'élément (3) de couplage a une épaisseur (E) inférieure ou égale à 60% de l'épaisseur de la couche (2) centrale.

6. Panneau (1) stratifié selon la revendication 4 ou 5, dans lequel l'élément (3) de couplage comprend une saillie (3B) verticale.

7. Panneau (1) stratifié selon l'une quelconque des revendications précédentes, dans lequel il comprend en outre une couche (5) extérieure de base agencée sur la seconde face de la couche (2) centrale.

8. Panneau (1) stratifié selon la revendication 7, dans lequel la couche (5) extérieure de base est en polychlorure de vinyle.

9. Panneau (1) stratifié selon la revendication 1 ou 8, dans lequel la couche (4) extérieure d'usure et la couche (5) extérieure de base recouvrent au moins un élément (3) de couplage respectif.

10. Panneau (1) stratifié selon l'une quelconque des revendications précédentes, dans lequel il a une forme rectangulaire et comprend:
une couche (2) centrale de liège aggloméré,
un élément (3) de couplage sur chacun des deux côtés (6, 7) opposés du panneau (1), l'élément (3) de couplage étant pourvu d'une saillie (3B) verticale et ayant une épaisseur (E) qui est de 50% de l'épaisseur de la couche (2) centrale et
une couche (5) extérieure de base en polychlorure de vinyle agencée sur la seconde face de la couche (2) centrale de liège aggloméré.

11. Revêtement de plancher, **caractérisé en ce qu'**il est constitué de panneaux (1) selon l'une quelconque des revendications précédentes.
